Europäisches Patentamt

European Patent Office

Office européen des brevets

(11) Publication number: **0 105 629 B1**

## EUROPEAN PATENT SPECIFICATION

(45) Date of publication of patent specification: **01.12.93**

(21) Application number: **83305161.8**

(22) Date of filing: **06.09.83**

(51) Int. Cl.⁵: **B29C 67/20**, C08J 9/08, C08J 5/18, B32B 5/18, C08J 9/22

(54) Microporous sheet material, method of making and articles made therewith.

(30) Priority: **09.09.82 US 416140**

(43) Date of publication of application:
**18.04.84 Bulletin 84/16**

(45) Publication of the grant of the patent:
**01.12.93 Bulletin 93/48**

(84) Designated Contracting States:
**BE DE FR GB IT LU NL**

(56) References cited:
FR-A- 2 373 388      GB-A- 1 044 502
GB-A- 1 078 895      GB-A- 2 026 381
US-A- 3 378 507      US-A- 4 206 980
US-A- 4 237 083

(73) Proprietor: **MINNESOTA MINING AND MANU-
FACTURING COMPANY
3M Center,
P.O. Box 33427
St. Paul, Minnesota 55133-3427(US)**

(72) Inventor: **Shipman, Gene H. c/o Minnesota
Mining and
Manufacturing Co.
2501 Hudson Road
P.O. Box 33427
St. Paul Minnesota 55133(US)**

(74) Representative: **Baillie, Iain Cameron et al
c/o Ladas & Parry
Altheimer Eck 2
D-80331 München (DE)**

**Description**

Technical Field

The invention relates to microporous sheet material, methods of making the same, and articles made therewith.

Background Art

Microporous films or membranes have a structure that enables fluids to flow through them. The effective pore size is at least several times the mean free path of the flowing molecules, namely from several micrometers down to about 100 Angstroms. Such sheets are generally opaque, even when made of a transparent material, because the surfaces and the internal structure scatter visible light.

Microporous membranes or films have been utilized in a wide variety of applications such as for the filtration of solids, the ultra filtration of colloidal matter, as diffusion barriers or separators in electrochemical cells, or in the preparation of synthetic leather, and in cloth laminates. The latter utilities require, of course, permeability to water vapor for the applications as synthetic shoes, raincoats, outer wear, camping equipment such as tents, and the like. Microporous films or membranes are often utilized for filter cleaning antibiotics, beer, oils, bacteriological broths, as well as for the analysis of air, microbiological samples, interveneous fluids, vaccines and the like. Microporous membranes or films are also utilized to make surgical dressings, bandages, and in other fluid transmissive medical applications. The microporous membrane or film may be laminated to other articles to make laminates having particular utility. Such laminations may include a microporous layer and an outer shell layer to provide a particularly useful garment material. The microporous films or membranes may be utilized as a tape backing to provide products such as a fluid-transmissive, wound dressing or hair set tape.

The art of preparing microporous films or membranes is not restricted, but rather is replete with a wide variety of methods of producing such articles. Methods commonly used to provide microporous films or membranes are described in the following references:

U.K. Patent Application GB 2,026,381 A, published February 6, 1980, discloses the preparation of membranes having a porous surface by blending polymer with a liquid component to form a binary two-phase system which, in the liquid aggregate state, has a region of miscibility and a region with miscibility gaps, forming a sheet of the blend in the former state, casting the film into a bath of the liquid component, and removing the liquid component to provide porosity. The resultant non-oriented porous sheet has a relatively low tensile strength.

Various patents assigned to W. L. Gore and Associates, Inc., including U.S. Patent Nos. 3,953,566; 3,962,153; 4,096,227; 4,110,392; 4,187,390 and 4,194,041, describe the preparation of porous articles, including microporous sheets formed exclusively of polytetrafluoroethylene (PTFE), not a thermoplastic polymer, characterized by having polymer nodes connected by fibrils. Such articles are produced by extruding a paste comprised of PTFE particles and a lubricant, removing the lubricant and stretching and annealing the resultant product. The resultant product is a sintered, oriented porous film of PTFE.

U.S. Pat. No. 3,201,364, assigned to Monsanto Company, describes the preparation of a non-oriented, non-porous packaging film comprised of a single phase blend of polypropylene and mineral oil.

U.S. Pat. Nos. 4,100,238 and 4,197,148 describe the preparation of microporous films by extruding a two component blend, solvent leaching one dispersed component and stretching the resultant leached film to obtain a desired porosity. The blend consists of polymer and a leachable, non-miscible substance. Once the leachable dispersed polymer phase is removed and the film oriented, a porous film results.

U.S. Pat. No. 3,679,540, assigned to Celanese Corporation, discloses a method for making a microporous polymer film by cold stretching an elastic polymer film until porous surface regions are formed by film failure, hot stretching the cold stretched film until fibrils and pores or open cells are formed and then heat setting the resultant film. Controlled porosity is generally not attained in such films because they do not always uniformly fibrillate to a specific pore size.

Certain U.S. patents disclose the preparation of porous polymer films by blending into the polymer a non-miscible leachable particulate substance such as starch, salts, etc. forming a sheet and leaching the particulate substance from the polymer sheet. Such U.S. patents include Nos. 3,214,501 and 3,640,829. U.S. Pat. No. 3,870,593 discloses the preparation of a microporous polymer sheet by blending non-miscible, non-leachable filler into the polymer, forming a sheet of the blend and stretching the sheet to form pores which are initiated at the sites of the filler particles.

US 4,206,980 discloses a method of making a microporous sheet, which includes the following steps:

(a) melt blending to form a solution of 40 to 85 parts by weight of a crystallizable thermoplastic polymer with correspondingly 60 to 15 parts by weight of a compound with which the thermoplastic polymer is miscible and in which the thermoplastic polymer will dissolve at the melting temperature of the thermoplastic polymer but which is immiscible below the melting temperature of the thermoplastic polymer and from which the thermoplastic polymer will phase separate on cooling to a temperature below the melting temperature of the thermoplastic polymer;

(b) forming a sheet of the melt blended solution;

(c) cooling the sheet to a temperature at which the compound becomes immiscible with the thermoplastic polymer to cause phase separation to occur between the thermoplastic polymer and the compound thereby to provide a sheet comprising an aggregate of a first phase comprising particles of the thermoplastic polymer in a second phase comprising the compound with adjacent thermoplastic polymer particles being distinct but having a plurality of zones of continuity.

Disclosure of Invention

This invention provides a method as disclosed in US 4,206,980, characterised in that said sheet is then stretched beyond the elastic limit in at least one direction to separate adjacent particles of thermoplastic polymer from one another to provide a network of interconnected micropores therebetween and to permanently attenuate the thermoplastic polymeric material in said zones of continuity to form fibrils and in that said solution comprises 30 to 80 parts by weight of said crystallizable thermoplastic polymer and correspondingly 70 to 20 parts by weight of said compound.

The compound may be removed from the sheet, e.g., by solvent extraction.

The formed sheet, before orientation, is a solid, generally transparent sheet comprising an aggregate of a first phase of particles of thermoplastic polymer in a second phase of the additive compound. The particles, may be described as lamellae, spherulites and aggregates of spherulites of the polymer with additive compound occupying the space between particles. Adjacent particles of polymer are distinct but they have a plurality of zones of continuity. That is, the polymer particles are generally surrounded or coated by the compound but not completely. There are areas of contact between adjacent polymer particles where phase separation has not occurred and there is a continuum of polymer from one particle to the next adjacent particle in such zones of continuity.

On stretching beyond the elastic limit the polymer particles are pulled apart, permanently attenuating the polymer in the zones of continuity thereby forming the fibrils and forming minute voids between coated particles, creating a network of interconnected micropores, thereby rendering the sheet permanently translucent. The size of the micropores is easily controlled by varying the degree of stretching, percent of additive compound, melt-quench conditions, compound removal and heat-stabilization procedures. The microfibrils for the most part do not appear to be broken by stretching but they are permanently stretched beyond their elastic limit so that they do not elastically recover to their original position when the stretching force is released. As used herein, "orienting" means such stretching beyond the elastic limit so as to introduce permanent set or elongation of the sheet. By contrast, US 4,206,980 (in the name of the applicant) discloses similar films but having fibrils not stretched beyond the elastic limit in order to preserve the reversibly transparent-translucent feature of the films described in the patent.

The invention also provides a microporous sheet material obtainable according to the process of the invention, said microporous sheet having an internal structure characterized by a multiplicity of spaced, randomly dispersed, non-uniform shaped, equiaxed, non-porous particles of said thermoplastic polymer coated with said compound, adjacent coated particles throughout said sheet being separated from one another to provide said sheet with a network of interconnected micropores and said adjacent thermoplastic polymer particles being connected to each other by a plurality of fibrils consisting of said thermoplastic polymer.

The invention also provides a laminated structure comprising the above microporous sheet material and at least one other sheet material.

Preferred features are defined in the dependent claims.

Brief Description of Drawings

Embodiments of the invention are described below by way of example only with reference to the drawings, wherein:

FIG. 1 is a diagrammatical view of an apparatus that may be used in the process of the invention to produce the microporous film of the invention;

3

FIG. 2 is a photomicrograph of the internal structure of a 50% machine direction oriented polypropylene microporous sheet according to the present invention at a magnification of 1000 X; and

FIGS. 3 and 4 are photomicrographs of the same subject as FIG. 2 except at higher magnifications of 5000 X and 10,000 X, respectively, to show more detail; and

FIG. 5 is a photomicrograph of the same subject as FIG. 2 showing the left half at a magnification of 5,000 X and having a portion of the left half (identified by a small rectangular border within the left half) further enlarged to a magnification of 25,000 X presented as the right half of this FIGURE to show further detail of the fibrils between particles in the sheet material.

FIG. 6 is a photomicrograph of the surface of a polyethylene biaxially oriented microporous sheet material according to the present invention at a magnification of 5000 X.

Detailed Description of Preferred Embodiments of the Invention

Crystallizable polymers suitable for use in the preparation of microporous sheet materials of the invention are well known and readily commercially available. Crystallizable polymers, upon cooling their melt under controlled conditions, spontaneously form geometrically regular and ordered chemical structures. Preferred crystallizable polymers for use in the present invention have a high degree of crystallinity and also possess a tensile strength of at least about 70 kg/cm$^2$ (1000 psi).

Examples of suitable crystallizable polymers include addition polymers such as polyolefins and condensation polymers such as polyesters and polyamides. Useful polyolefins preferably include the polymers of ethylene and propylene but also may include isobutylene, 1-octene, styrene, isoprene, and the like, and copolymers of two or more such olefins that may be polymerized to contain crystalline and amorphous segments and mixtures of stereo-specific modification of such polymers e.g., mixtures of isotactic polypropylene and atactic polypropylene, isotactic polystyrene and atactic polypropylene. Useful polyesters include polyethylene-terephthalate, polybutylene-terephthalate, polyhexamethyleneadipate, polyhexamethylenesuccinate, and polyester copolymers. Useful polyamides include polyhexamethyleneadipamide, polyhexamethylenesebacamide and polycaprolactam. Another useful polymer is polyvinylidene fluoride.

Compounds suitable for blending with the crystallizable polymer to make the microporous sheet materials of the invention are liquids or solids at room temperature and in which the crystallizable polymer will dissolve to form a solution at or near the melting temperature of the crystallizable polymer but will become immiscible on cooling and from which the crystallizable polymer will phase separate on cooling below the melting temperature of the crystallizable polymer. Preferably, these compounds have a boiling point at atmospheric pressure at least as high as the melting temperature of the crystallizable polymer. Compounds having lower boiling points may be used in those instances where superatmospheric pressure may be employed to elevate the boiling point of the compound to a temperature at least as high as the melting temperature of the crystallizable polymer. Generally, suitable compounds have a solubility parameter and a hydrogen bonding parameter within a few units of the values of these parameters for the crystallizable polymer.

Some examples of blends of crystallizable polymers and blending compounds which are useful in preparing microporous sheet materials according to the present invention include: polypropylene with mineral oil, dioctylphthalate or mineral spirits; polypropylene-polyethylene copolymer with mineral oil; polyethylene with mineral oil or mineral spirits; polyethylene terephthalate and polybutylene terephthalate with diethylphthalate; polyester elastomer with dioctylphthalate, nylon 6 (polycaprolactam) with triethylene glycol; and polyvinylidene fluoride with dibutyl phthalate.

The melt is prepared by mixing 30 to 80% by weight of crystallizable thermoplastic polymer and correspondingly 70 to 20% by weight of blending compound and heating the mixture to at least the melting point of the crystallizable polymer. For ease of handling the melt and in its casting, it is convenient to initiate the formation of the melt-blend solution by heating the mixture to 25°C. to about 100°C. above the melting point of the crystallizable polymer.

The microporous sheet materials of the invention are prepared by casting a layer of a melt-blend solution comprising a crystallizable polymer and a blending compound and, depending on the particular polymer, cooling the layer in a quench bath at an appropriate temperature preferably between about 90°C and 225°C. below the melting temperature of the crystallizable polymer to provide a proper cooling rate. (For example for polypropylene having a melting point of 176°C., a cooling temperature between about 40°C. and 60°C. is employed.) Some minor degree of experimentation may be required to identify the appropriate temperature range which produces optimum phase separation for a particular polymer-blending compound system, this being well within the capability of one skilled in the art once apprised of the present

4

disclosure.

The attainment of the films of the invention is dependent on the rate of cooling. During cooling, heat is removed from the melt-blend solution until the melting temperature of the crystallizable polymer is reached and solidification and phase separation of the polymer can begin. Cooling temperatures greater than about 225°C. below the melting point of the crystallizable polymer causes too rapid quenching of the melt and can result in single phase films which, although strong and transparent (as taught in the prior art), are substantially incapable of being rendered uniformly microporous by stretching. Cooling at temperatures of less than about 90°C. below the melting point of the crystallizable polymer allows for a too slow phase separation (crystallization) of the crystallizable polymer with formation of large spherulites that results in films which are weak. Casting films which are too thick, i.e., thicker than 1,000 micrometers, to achieve the proper cooling rate as described above also allows for a too slow crystallization.

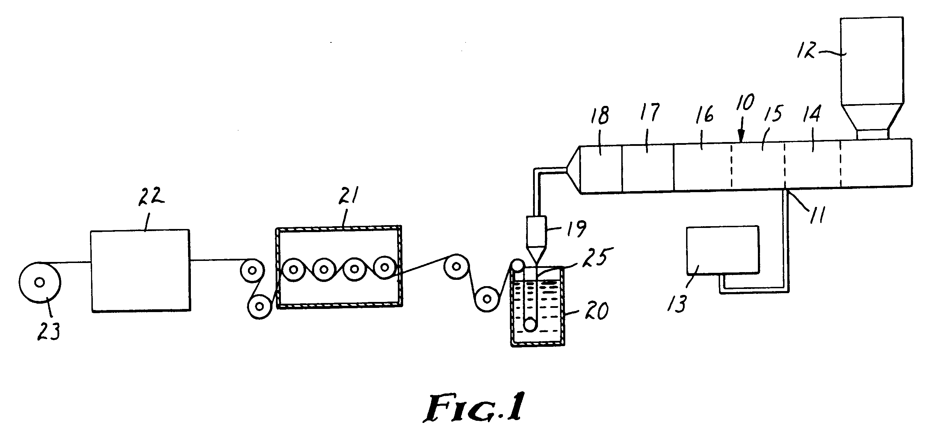

As shown in FIG. 1, generally, the melt-blend solution is obtained by feeding into the hopper 12 of an extruder 10 a mixture of crystallizable polymer and blending compound through the extruder which is heated, preferably with 3 zones 14, 15, 16, respectively heated at increasing temperatures toward the extruder exit 17 to a slot die 19 that has a slit gap of 25 to 1,000 micrometers. Preferably, the crystallizable polymer is fed into the hopper of the extruder and the blending compound is fed by a suitable device 13 into the extruder via a port 11 in the extruder wall intermediate the hopper and the extruder exit 17. It is also preferable to utilize a suitable mixing device such as a static mixer 18 between the extruder exit 17 and the slot die 19. In passing through the extruder, and, where used, the static mixer, the mixture of polymer and blending compound is heated to a temperature at or at least about 25°C. above the melting point of the crystallizable polymer (but below the thermal degradation temperature of the polymer) and mixed to form a melt-blend solution that is extruded through the slot die 19 as a layer 25 into a liquid quench bath 20 maintained at a suitable temperature below the melting temperature of the crystallizable polymer using a suitable coolant, e.g., water. In some instances, e.g., for nylon and polyester, it is necessary to cool the solution in the extruder before it reaches the die to a temperature as much as 50°C cooler than the melting temperature of the polymer in order to obtain phase separation in the sheet. The cooled film is then led from the quench bath 20, to machine-direction orienting device 21, transverse direction orienting device 22 and then to take-up roller 23. Orienting in two directions is, of course, optional.

The films of the invention possess a tensile strength of at least about 10 kg/cm$^2$, more often 50 kg/cm$^2$ or higher depending on the tensile strength of the crystallizable polymer used and the extent of orientation.

The films are rendered microporous by stretching until micropores are permanently developed or formed in the film, typically to at least obtain an increase in length (elongation) of about 10%. Stretching to provide an elongation of about 10% to about 1,000% is typical. The actual amount of stretching required will depend on the particular composition of the film and the degree of porosity desired. Stretching may be provided by any suitable device which can provide stretching in at least one direction and may provide stretching both in that direction and in the transverse direction. Stretching should be uniform to obtain uniform and controlled porosity. Stretching in one direction typically causes the film to narrow or "neck" in the cross direction so stretching to provide an elongation of 50%, for example, does not produce a 50% increase in the surface area of the film.

The microporous sheet materials of the present invention are preferably dimensionally stabilized according to conventional well known techniques by heating the oriented sheet while it is restrained at a heat stabilizing temperature.

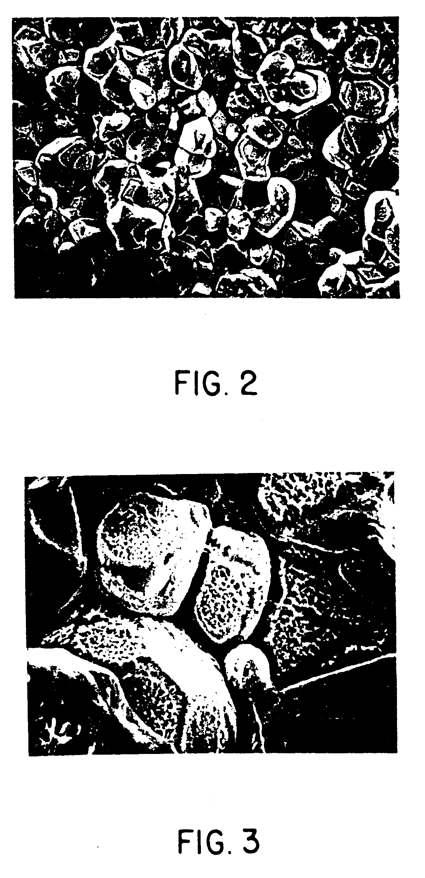

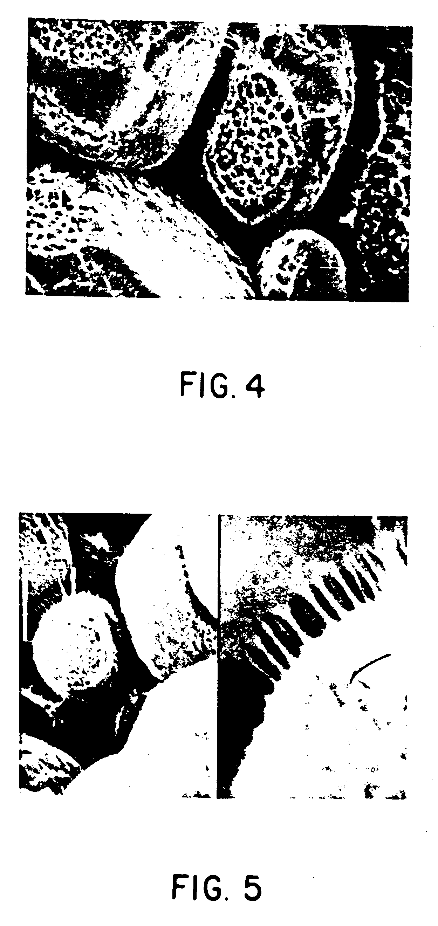

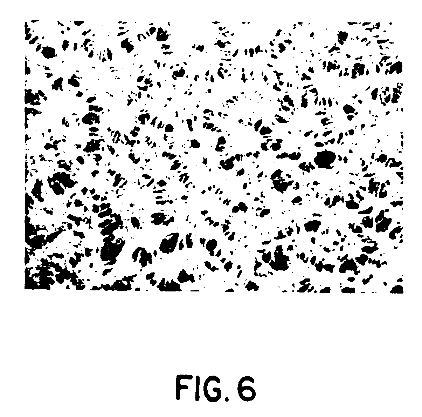

As shown in photomicrographs FIGS. 2-6, the microporous sheet material of the invention is composed of randomly dispersed, equiaxed, irregularly shaped, nonporous particles of thermoplastic polymer. It should be noted that the blending compound had been removed prior to taking photomicrographs 2-6. Particles are spaced from one another to provide a network of micropores therebetween. Particles are connected to each other by fibrils, shown in detail in FIG. 5, which radiate from each particle to the next adjacent particles. The porous structure appearing on the face of some of the particles in photomicrographs 2-5 is not an indication that the particles are porous but instead shows the residue of the fibrils as they retract to the particle once the sheet material is ruptured to reveal the internal structure.

The blending compound may be removed from the microporous sheet to provide a unique microporous sheet material formed of the polymeric material per se. Removal may be by solvent extraction, volatilization, or any other convenient method. Once the blending compound has been removed, the resultant microporous sheet may be imbibed with various materials to provide any of a variety of specific functions, thereby providing unique articles. For example, the imbibing material may be a liquid, solvent solution, solvent dispersion or solid. Such materials may be imbibed by any of a number of known methods which results in the deposition of such materials within the porous structure of the microporous sheet. Some imbibing materials are merely physically placed within the microporous sheet. In some instances, the use of

5

two or more reactive components as the inbibing materials permits the reaction within the microporous sheet structure. Examples of imbibing material include medicaments, fragrances, antistatic agents, surfactants, pesticides and solid particulate material such as activated carbon and pigments. Certain materials, such as antistat or surfactants, may be imbibed without removal of the blending compound.

The microporous sheet material, either both before or after removal of the blending compound, may be further modified by the deposition thereon of any of a variety of compositions by any of a variety of known coating or deposition techniques. For example, the microporous sheet material may be coated with metal by vapor deposition or sputtering techniques or it may be coated with adhesives, aqueous or solvent-based coating compositions or dyes. Coating may be accomplished by such other conventional coating techniques as roll coating, spray coating, dip coating or any other known coating techniques.

The microporous sheet materials of the present invention may be laminated to any of a variety of other structures such as other sheet materials to provide a composite structure which includes the microporous sheet material of the present invention. Lamination can be accomplished by conventional techniques.

The microporous sheet materials of the invention may be employed in any of a wide variety of situations where their microporous structures may be utilized. They may be used in the ultrafiltration of colloidal matter, as diffusion barriers or separators in electrochemical cells. They may be laminated to other materials and the laminate may be utilized in many ways, such as to form raincoats or other outer wear, camping equipment such as tents and sleeping bags. The microporous sheet materials may be utilized as filtering material for cleaning antibiotics, beer, oils, bacteriological broths and for sample collection in air analysis and to collect microbiological specimens. They may be utilized to make surgical dressings, bandages and in other medical applications. Many other uses for microporous sheets can be found in the literature.

## EXAMPLES

The invention is further illustrated by the following examples, wherein all parts are by weight, unless otherwise specified.

## EXAMPLE 1

Crystallizable polypropylene (available under the trade designation "Profax" type 6723 from Hercules, Inc.) having a density of 0.903 g/cc, a melt flow index of 0.8 and a melting point of about 176°C. was introduced into the hopper of a 2.5 cm extruder fitted with a 10.16 cm by 0.076 cm slit gap sheeting die positioned above a water quench tank. The polypropylene was fed into the extruder and the extruder operated at a 60 cc/min through put rate to produce a polypropylene sheet collected at the rate of 7.6 meters per minute. Mineral oil (available under the trade designation "Nujol" from Plough, Inc.) having a boiling point of 200°C. and a standard Saybolt viscosity of 360-390 at 38°C. (about 80 centistokes) was introduced into the extruder through an injection port at a rate to provide a blend of 70% by weight polypropylene and 30% by weight mineral oil. The mixture was cast as a transparent film into the water quench bath which was maintained at 49°C., producing a quenched film at the rate of 7.6 meters per minute. The melt in the extruder and the sheet die was maintained at approximately 245°C. during extrusion. The resulting film was then oriented at room temperature in the machine direction to obtain varying degrees of elongation. The porosity of each film was measured according to ASTM-D-726-58, Method A, by using a Gurley densometer to measure the time in seconds to pass 50 cc of air through the film. Porosity measurement results are reported in Table I.

## EXAMPLE 2

A blend of 80% polypropylene and 20% mineral oil (of the same polymer and oil described in Example 1) was extruded as described in Example 1 into a water bath maintained at 49°C. collected at the rate of 7.6 meters per minute while maintaining the melt temperature at 245°C. and the film die at the same temperature. Stretching versus porosity results are shown in Table I.

## EXAMPLE 3

The system described in Example 1 was used to extrude a blend as described in Example 2 except the quench bath was maintained at 60°C. to produce a film. Evaluation results of the film are shown in Table I.

EXAMPLE 4

Following the conditions described in Example 1, a 60:40 blend of polypropylene:mineral oil was prepared and stretched but found to be unsuitable because the film broke at a lengthwise stretch of less than 10%. The unstretched film had poor integrity and crumbled easily with touch.

EXAMPLE 5

A 70:30 polypropylene:mineral oil blend was extruded as described in Example 1 (except the film die was maintained at 260°C.) into a quench bath at 40°C. The film was stretched and its porosity determined. Results are shown in Table I.

EXAMPLE 6

The experiment of Example 5 was repeated except the film die was heated at 275°C. and the water bath maintained at 40°C. The resultant film was stretched and evaluated for porosity with results shown in Table I.

EXAMPLE 7

The experiment of Example 6 was repeated. The porosity was measured after stretching to 35%. The 35% stretched film was then restrained and heat set in an oven for 5 minutes at 107°C. and its porosity was then measured. The film was given another 5 minutes under restraint in the oven at 107°C. and its porosity was measured again. The film was then washed with toluene while restrained to remove mineral oil and dried in an oven at 107°C. and its porosity measured again. The result of each of the measurements is shown in Table I as Examples 7, 7a, 7b, and 7c, respectively.

EXAMPLE 8

A 60:40 blend of high density polyethylene having a density of 0.946 g/cc and a melt-flow index of 3.0 (available under the trade designation "Marlex" 6030 from Phillips Petroleum Company) and mineral oil ("Nujol") was extruded in the same manner as described in Example 1 to produce a film which was in line lengthwise stretched 50% and collected. The resultant film was further machine direction stretched while in a stretching apparatus and its porosity measured with results being shown in Table I as Example 8.

This film was then washed while under restraint with toluene to remove the mineral oil, air dried and its porosity measured. The results, identified under Example 8a are shown in Table I.

The film of Example 8a was heat annealed for 10 minutes at 93°C. and then, after cooling, the air permeability measured. Results are shown in Table I under Example 8b.

The film described in Example 8b was cross stretched approximately 30% and the porosity measured with results shown in Table I under Example 8c.

EXAMPLE 9

A film was prepared from a melt blend of 70 parts polyethylene-polypropylene copolymer (available under the trade designation "Shell" copoly P 6313) and 30 parts mineral oil as described in Example 1 under the same conditions. The resultant transparent film was mounted in a stretching apparatus, stretched 50% in the lengthwise direction, washed with toluene while restrained at ambient temperature and heat set at 107°C. for 10 minutes. The porosity before stretching, solvent washing and annealing was too high to measure. The porosity after this treatment was 415.8 seconds.

EXAMPLE 10

The microporous films of Examples 1, 2, 5, 6 and 8c were tested for moisture vapor transmission by comparing the moisture evaporation or transmission rate of water from an open jar and with each of the tests samples applied over the jar opening. The open jar was considered to have a 100% moisture transmission rate and the relative transmission rate of each of the film samples is compared to the transmission rate of the open jar. Ambient conditions were used, i.e., approximately 21°C. at 50% relative humidity. Results are shown in Table II. The moisture vapor transmission rate of two commercially available microporous films available under the trade designation "Celgard" from the Celanese Company were also evaluated and the results are also reported in Table II.

EXAMPLE 11

A film as described in Example 1 was prepared with the exception that it was stretched 50% in line lengthwise and its width stretched 50% in line. The film was measured for porosity and moisture vapor transmission, as in Example 10 and without the mineral oil removed and with the oil removed by washing with toluene as in Example 11a. Results are:

| Ex. No. | MVT% (g/m$^2$/24 hrs.) | MVT% | Porosity (seconds to pass 50 cc of air) |
|---------|------------------------|------|------------------------------------------|
| 11      | 1102.8                 | 76   | 48.1                                     |
| 11a     | 1131.8                 | 78   | 25.8                                     |

EXAMPLE 12

A 70:30 blend of polypropylene:dioctyl phthalate was extruded to form a film as described in Example 1 except the melt temperature was 260°C. and the water quench temperature was maintained at 60°C. The film was lengthwise stretched 65% in a stretching apparatus and found to have an air porosity of 1155.3 seconds.

The stretched film described above was washed with methylethyl ketone solvent to remove the dioctyl phthalate and air dried. This film had an air porosity of 840.4 seconds.

The film described above was annealed for 10 minutes at 107°C. under restraint and its air porosity found to be 713.9 seconds.

EXAMPLE 13

The 70:30 blend of polypropylene:mineral oil described in Example 1 was formed into a sheet as described except the molten blend was cast onto a casting wheel maintained at 30°C. The resultant transparent film was in line length stretched 50% resulting in an opaque film which was measured for air porosity and moisture transmission. The film had no apparent air porosity and had a moisture vapor transmission of 330 g/m$^2$/24 hrs. or 23%. This film had a unique physical structure, unlike the films of the previous examples which have an open or porous structure on both surfaces and throughout the film. This film had a porous structure on one side and approximately 75% through the thickness of the film, whereas the other side and the remaining 25% of the thickness had a fused or compressed structure. This fused or sealed side of the film had contacted the casting wheel upon exiting the film die. The porous side of the film could be marked with a felt-tipped marking pen whereas the smooth opposite side could not easily be marked and, when markings were placed on the smooth side, they smeared or wiped off easily. Films with such properties can be used as protective films or tapes, either for the resistance to marking or, by reversing the film to use the opposite side, for ready markability.

EXAMPLE 14

A 70:30 blend of polyester copolymer (available under the trade designation "Hytrel" 6346) and dioctyl phthalate was pelletized using a Baker Perkins twin screw compounder. ("Hytrel" is the trade designation of a polyester elastomeric block copolymer of short chain diol terephthalate and long chain polyester diol terephthalate manufactured by the E. I. DuPont Company.) The pellets were extruded as described in Example 1, except that no, other dioctyl phthalate was injected into the system and the melt temperature was maintained at 274°C. and the water quench bath was maintained at 55°C. The resulting transparent film film was mounted in a length stretching apparatus and stretched 40%. The stretched film was washed with methylethyl ketone solvent to remove the dioctyl phthalate and its air porosity measured, after drying. The air porosity was 15,350 seconds. The film was biaxially stretched 40% and then found to have a porosity of 7,255 seconds.

### EXAMPLE 15

Nylon 6 (available from the Foster Grant Company under the trade designation "FOSTA" Number 471) was extruded on the 2.5 cm extruder while triethylene glycol was injected into the extruder barrel to provide a 60:40 nylon 6:triethylene glycol blend which was cast from a 10.16 cm by 0.076 cm slit gap sheeting die heated at 220°C. and cast into a water quench bath at the rate of 5.2 meters per minute with the water bath being maintained at 44°C. The extruder melt temperature of the blend was maintained at 220°C. The film usually cast as transparent although, as some of the triethylene glycol was removed by the water in the quench bath, the film assumed a slightly opaque appearance on drying. As the glycol dissipated, the film became completely opaque. The dried film was stretched lengthwise 30% and the air porosity found to be 350 seconds.

### EXAMPLE 16

A film was prepared of the blend described in Example 8, length stretched 35% in a stretching apparatus, and found to have a porosity of 848.1 seconds. The film was then solvent washed while restrained in isopropanol to remove oil, air dried and found to have a porosity of 130.3 seconds. The film was heated to 93.3°C. for 5 minutes in the stretching apparatus and found to have an air porosity of 71.8 seconds. The film was then cross stretched 30% and found to have a porosity of 34 seconds.

A similar freshly formed film as described above was washed in isopropyl alcohol and, after drying, found to have a porosity of 835.7 seconds. The film was length stretched 35% and found to have a porosity of 211.4 seconds. Upon heat treating the stretched film at 93.3°C. for 5 minutes, its porosity was found to be 111.8 seconds. The same film cross stretched 30% had an air porosity of 32.3 seconds.

### EXAMPLE 17

A 60:40 blend of high density polyethylene available from Atlantic Richfield Co. under the trade designation "Arco" 8590 having a density of 0.955 and a melt flow index of 11.0 and mineral oil "Nujol" was melt mixed in an extruder, cast from a 10.16 cm by 0.06 cm slit gap sheeting die at a melt temperature of 126.7°C. (approximately 10°C. below its crystalline melting point) into a water quench bath maintained at 48°C. and collected at the rate of 7.6 meters per minute. The resulting transparent film was length stretched 25% and solvent extracted with isopropyl alcohol to remove mineral oil to produce a microporous film having a porosity of 595 seconds. The microporous film was cross stretched 25% and its air porosity found to be 193 seconds. After heat treatment at 93.3° for 5 minutes, the porosity was 192 seconds.

### EXAMPLE 18

A 65:35 blend of polypropylene (available under the trade designation "Profax" 6330 having a density of 0.90 g/cc and a melt flow index of 12.0):mineral oil ("Nujol") was melt mixed in the extruder cast from a 10.06 cm by 0.06 cm slit gap sheeting die at a melt temperature of 164°C., approximately 10° below its crystalline melt point, into a water quench bath maintained at 45°C. and collected at 7.3 meters per minute. The resulting transparent film was cross stretched 30% and washed with isopropyl alcohol to remove mineral oil, producing a microporous film having a porosity of 1170 seconds.

### EXAMPLE 19

A 55:45 blend of polyethylene terephthalate having an intrinsic viscosity of 0.6 and a density of 1.37 g/cc and diethyl phthalate was melt blended and extruded using the apparatus described in Example 1 except the extrusion orifice was 10.16 cm by 0.06 cm and the melt temperature was 215°C., approximately 50° below its crystalline melting point. The water quench bath was maintained at 40°C. and the film collected at 3.66 meters per minute. The resulting transparent film was stretched 20% in the lengthwise direction under ambient conditions and 20% in the cross direction, washed in isopropyl alcohol to remove the diethyl phthalate, dried and found to have a porosity of 7675 seconds.

### EXAMPLE 20

A 70:30 blend of polybutylene terephthalate (available from Eastman Chemical Company under the trade designation "Tenite" 6-P4D) and diethyl phthalate was melt mixed in the extruder, cast from a 10.16 cm by 0.06 cm slit gap sheeting die at a melt temperature of 224°C., approximately at its crystalline melting point, into a water quench bath maintained at 60°C. and collected at 6.7 meters per minute. The resulting transparent film was stretched under ambient conditions in the length and cross directions 20% and washed in toluene to remove the diethyl phthalate. The resulting microporous film had a porosity of 2,735 seconds.

EXAMPLE 21

The 30:70 blend of high density polyethylene having a density of 0.955 and a melt flow index of 11.0 (available under the trade designation "Arco" 8590):mineral oil ("Nujol") was melt mixed in the extruder at 254°C. and cast from the 10.16 cm by 0.06 cm slit of the sheeting die at a melt temperature of 271°C. into quench water maintained at 54°C. and collected at the rate of 7.62 meters per minute. The resultant transparent film was washed with toluene to remove the mineral oil and the film was stretched 35% in the machine direction and cross stretched 25%. The resultant stretched microporous film had a porosity of 4.8 seconds.

EXAMPLE 22

A 60:30 blend of polyvinylidene fluoride (having a density of 1.75 g/cc and being available from Pennwalt Chemicals Company under the trade designation "Kynar" 740) and dibutyl phthalate was melt mixed in a twin screw extruder at 250°C. and cast from a 0.06 cm by 15.24 cm slit 260°C. sheeting die into a 32° water bath to produce a film which was collected at the rate of 7.62 meters per minute. The resultant transparent film was washed with 1,1,1-trichloroethane, biaxially stretched 10% in each direction and its air porosity found to be 1,099 seconds. The moisture vapor transmission was found to be 25%.

TABLE I

| Length Increase (%) | Example No. | 1 | 2 | 3 | 4 | POROSITY (SEC TO PASS 50 cc AIR) | | | | | | | | | |
| --- | --- | --- | --- | --- | --- | --- | --- | --- | --- | --- | --- | --- | --- | --- | --- |
| | | | | | | 5 | 6 | 7 | 7a | 7b | 7c | 8 | 8a | 8b | 8c |
| 0 | | * | | | | | | | | | | | | | |
| 5. | | | | | | | | | | | | | | | |
| 10. | | 3760.0 | | | | 638.3 | 508.7 | 472.1 | | | | | | | |
| 15. | | | | | | | | | | | | | | | |
| 20. | | | | | | | | | | | | | | | |
| 25. | | 710.2 | | 814.5 | | 128.9 | 73.2 | 68.8 | | | | | | | |
| 30. | | 572.4 | | | | 73.6 | | | | | | | | | |
| 35. | | 499.5 | | | | 60.4 | 41.5 | 35.4 | 21.7 | 21.6 | 15.8 | | | | |
| 40. | | 451.2 | | 475.1 | | 54.3 | 36.2 | | | | | | | | |
| 45. | | 421.4 | | | | 50.5 | 32.0 | | | | | 471.7 | | | |
| 50. | | 398.2 | | 411.2 | | 43.4 | 24.8 | | | | | | | | |
| 55. | | | | | | | 21.4 | | | | | 369.1 | | | |
| 60. | | 354.4 | | 348.9 | | | 19.5 | | | | | | | | |
| 65. | | 337.8 | | | | | 16.5 | | | | | 366.4 | 106.5 | 67.0 | 20.7 |
| 70. | | 350.5 | | 333.6 | | | | | | | | | | | |
| 75. | | 277.1 | | | | | | | | | | | | | |
| 80. | | 324.2 | | 326.4 | | | | | | | | | | | |
| 85. | | 376.5 | | | | | | | | | | | | | |
| 90. | | | | 298.1 | | | | | | | | | | | |
| 95. | | | | | | | | | | | | | | | |

EP 0 105 629 B1

TABLE I

| Length Increase (%) | Example No. | POROSITY (SEC TO PASS 50 cc AIR) | | | | | | | | | | | | | | |
|---|---|---|---|---|---|---|---|---|---|---|---|---|---|---|---|---|
| | | 1 | 2 | 3 | 4 | 5 | 6 | 7 | 7a | 7b | 7c | 8 | 8a | 8b | 8c |
| 100. | | 406.7 | 10,000 | 311.2 | | | | | | | | | | | |
| 110. | | 465.9 | | | | | | | | | | | | | |
| 120. | | 416.8 | | | | | | | | | | | | | |
| 130. | | 493.7 | | 317.4 | | | | | | | | | | | |
| 140. | | 443.1 | | | | | | | | | | | | | |
| 150. | | | | | | | | | | | | | | | |
| 160. | | 620.9 | | | | | | | | | | | | | |

* No measurable air porosity by ASTM-D-726-58

### TABLE II

| | gm H$_2$O/m$^2$/24 hrs. | Moisture Vapor Transmission (%) | Length Increase (Machine direction) (%) | Length Increase (Transverse direction) (%) |
|---|---|---|---|---|
| Open jar H$_2$O | 1451.0 | 100.0 | — | |
| Example 1 | — | 0.0 | 0. | |
| Example 2 | 842 | 58.0 | 100. | |
| Example 5 | 896.3 | 62.0 | 50. | |
| Example 6 | 1023.0 | 70.5 | 65. | |
| Example 8c | 856.1 | 59.0 | 65. | 30. |
| Example 11 | 1102.8 | 76.0 | 50. | 50. |
| Example 11a | 1131.8 | 78.0 | 50. | 50. |
| "Celgard" 2400 | 972.1 | 67.0 | — | |
| "Celgard" 2500 | 1117.3 | 77.0 | — | |

"Celgard" is a Celanese Corp. registered trademark for porous films

## Claims

1. A method of making a microporous sheet, which includes the following steps:

(a) melt blending to form a solution of a crystallizable thermoplastic polymer with a compound with which said thermoplastic polymer is miscible and in which said thermoplastic polymer will dissolve at the melting temperature of said thermoplastic polymer but which is immiscible below the melting temperature of said thermoplastic polymer and from which said thermoplastic polymer will phase separate on cooling to a temperature below the melting temperature of said thermoplastic polymer;

(b) forming a sheet (25) of the melt blended solution;

(c) cooling said sheet to a temperature at which said compound becomes immiscible with said thermoplastic polymer to cause phase separation to occur between said compound and said polymer thereby to provide a sheet comprising an aggregate of a first phase comprising particles of said thermoplastic polymer in a second phase comprising said compound with adjacent thermoplastic polymer particles being distinct but having a plurality of zones of continuity; characterized in that said sheet (25) is then stretched beyond the elastic limit in at least one direction to separate adjacent particles of thermoplastic polymer from one another to provide a network of interconnected micropores therebetween and to permanently attenuate the thermoplastic polymeric material in said zones of continuity to form fibrils and in that said solution comprises 30 to 80 parts by weight of said crystallizable thermoplastic polymer and correspondingly 70 to 20 parts by weight of said compound.

2. The method of claim 1 further characterized by said orienting being biaxial orienting.

3. The method of claim 1 further characterized by said orienting providing a length increase in said sheet-(25) of from about 10 to about 1,000 percent of the original length of said sheet.

4. The method of any preceding claim further characterized by including the additional step of removing said compound.

5. The method of any preceding claim further characterized by including the additional step of dimensionally stabilizing said sheet (25) by heating the oriented sheet, while it is restrained, to a heat stabilizing temperature.

6. The method of any of claims 1, 3, 4 and 5 further including the additional step of laminating said microporous sheet (25) to a second sheet.

7. The method of any preceding claim further characterized by said thermoplastic polymer and said compound being selected from the group consisting of
    (a) polypropylene with mineral oil, dioctylphthalate or mineral spirits;
    (b) polyethylene with mineral oil or mineral spirits;
    (c) polypropylene-polyethylene copolymer with mineral oil;
    (d) polyethylene terephthalate with diethylphthalate;
    (e) polycaprolactam with triethylene glycol;
    (f) polyvinylidene fluoride with dibutyl phthalate;
    (g) polybutylene terephthalate with diethylphthalate; and
    (h) polyester copolymer with dioctylphthalate.

8. The method of claims 1 and 4 further characterized by including the additional step of imbibing the microporous sheet material with an imbibing material.

9. The method of claims 1 and 4 further characterized by including the additional step or coating the resultant microporous sheet material.

10. A microporous sheet material obtainable according to the process of claim 1, said microporous sheet having an internal structure characterized by a multiplicity of spaced, randomly dispersed, non-uniform shaped, equiaxed, non-porous particles of said thermoplastic polymer coated with said compound, adjacent coated particles throughout said sheet being separated from one another to provide said sheet with a network of interconnected micropores and said adjacent thermoplastic polymer particles being connected to each other by a plurality of fibrils consisting of said thermoplastic polymer.

14

**11.** A laminated structure comprising microporous sheet material (25) according to claim 10 and at least one other sheet material.

**12.** The microporous sheet material (25) of claim 10 further characterized by said thermoplastic polymer and said compound being selected from the group consisting of
> (a) polypropylene with mineral oil, dioctylphthalate or mineral spirits;
> (b) polyethylene with mineral oil or mineral spirits;
> (c) polypropylene-polyethylene copolymer with mineral oil;
> (d) polyethylene terephthalate with diethylphthalate;
> (e) polycaprolactam with triethylene glycol;
> (f) polyvinylidone fluoride with dibutyl phthalate;
> (g) polybutylene terephthalate with diethylphthalate; and
> (h) polyester copolymer with dioctylphthalate.

**13.** A microporous sheet material (25) made according to the process of claim 5 characterized by comprising crystallizable thermoplastic polymer, said microporous sheet having an internal structure characterized by a multiplicity of spaced, randomly disposed, non-uniform shaped, equiaxed, non-porous particles of said thermoplastic polymer, adjacent particles throughout said sheet being separated from one another to provide said sheet with a network of interconnected micropores and being connected to each other by a plurality of fibrils consisting of said thermoplastic polymer.

**14.** A laminated structure further characterized by including the microporous sheet (25) of claim 13 and at least one other sheet material.

**Patentansprüche**

**1.** Verfahren zur Herstellung einer mikroporösen Folie, umfassend die folgenden Schritte:
> (a) Schmelzflüssiges Mischen, um eine Lösung eines kristallisierbaren thermoplastischen Polymers mit einer Verbindung zu bilden, mit der das thermoplastische Polymer mischbar ist und in der sich das thermoplastische Polymer bei der Schmelztemperatur des thermoplastischen Polymers auflöst, die jedoch unterhalb der Schmelztemperatur des thermoplastischen Polymers nicht mischbar ist, und von der das thermoplastische Polymer beim Kühlen auf eine Temperatur unterhalb der Schmelztemperatur des thermoplastischen Polymers eine Phasentrennung zeigt;
> (b) Formen einer Folie (25) der schmelzflüssig gemischten Lösung;
> (c) Kühlen der Folie auf eine Temperatur, bei der die Verbindung mit dem thermoplastischen Polymer unmischbar wird, um das Auftreten einer Phasentrennung zwischen der Verbindung und dem Polymer zu bewirken und dadurch eine Folie zu schaffen, die ein Aggregat einer ersten Phase mit Teilchen des thermoplastischen Polymers in einer zweiten Phase aufweist, wobei die Verbindung mit angrenzenden thermoplastischen Polymerteilchen getrennt ist und jedoch eine Vielzahl von Kontinuitätszonen aufweist, dadurch gekennzeichnet, daß die Folie (25) sodann mindestens in einer Richtung über ihre Elastizitätsgrenze hinaus gereckt wird, um angrenzende Teilchen von thermoplastischem Polymer voneinander zu trennen und ein Netzwerk von miteinander verbundenen Mikroporen dazwischen zu schaffen und das thermoplastische polymere Material in diesen Kontinuitätszonen zur Bildung von Fasern dauerhaft zu schwächen, und daß die Lösung 30 bis 80 Gewichtsteile des kristallisierbaren thermoplastischen Polymers und dementsprechend 70 bis 20 Gewichtsteile der Verbindung aufweist.

**2.** Verfahren nach Anspruch 1, ferner dadurch gekennzeichnet, daß die Orientierung eine biaxiale Orientierung ist.

**3.** Verfahren nach Anspruch 1, ferner dadurch gekennzeichnet, daß die Orientierung eine Längenzunahme in der Folie (25) von etwa 10 bis 1.000 Prozent der Ausgangslänge der Folie schafft.

**4.** Verfahren nach einem der vorstehenden Ansprüche, ferner gekennzeichnet durch die Einbeziehung des zusätzlichen Schrittes der Entfernung der Verbindung.

**5.** Verfahren nach einem der vorstehenden Ansprüche, ferner gekennzeichnet durch den zusätzlichen Schritt der Dimensionsstabilisierung der Folie (25), indem die orientierte Folie unter gleichzeitigem

EP 0 105 629 B1

Zurückhalten auf eine wärmestabilisierende Temperatur erhitzt wird.

**6.** Verfahren nach Anspruch 1, 3, 4 und 5, ferner gekennzeichnet durch die Einbeziehung des zusätzlichen Schritts des Laminierens der mikroporösen Folie (25) auf eine zweite Folie.

**7.** Verfahren nach einem der vorstehenden Ansprüche, ferner dadurch gekennzeichnet, daß das thermoplastische Polymer und die Verbindung aus der Gruppe ausgewählt werden, bestehend aus:
    (a) Polypropylen mit Mineralöl, Dioctylphthalat oder Lackbenzine;
    (b) Polyethylen mit Mineralöl oder Lackbenzine;
    (c) Polypropylen/Polyethylen-Copolymer mit Mineralöl;
    (d) Polyethylenterephthalat mit Diethylphthalat;
    (e) Polycaprolactam mit Triethylenglycol;
    (f) Polyvinylidenfluorid mit Dibutylphthalat;
    (g) Polybutylenterephthalat mit Diethylphthalat und
    (h) Polyester-Copolymer mit Dioctylphthalat.

**8.** Verfahren nach Anspruch 1 und 4, ferner gekennzeichnet durch die Einbeziehung des zusätzlichen Schritts der Imbibition des mikroporösen Folienmaterials mit einem Tränkmittel.

**9.** Verfahren nach Anspruch 1 und 4, ferner gekennzeichnet durch die Einbeziehung des zusätzlichen Schritts des Beschichtens des resultierenden mikroporösen Folienmaterials.

**10.** Mikroporöses Folienmaterial, welches nach dem Verfahren nach Anspruch 1 erhalten wird, wobei die mikroporöse Folie eine Innenstruktur aufweist, die gekennzeichnet ist durch eine Vielzahl von beabstandeten, wahllos verteilten, nicht gleichförmig geformten, gleichachsigen, nichtporösen Teilchen des mit der Verbindung beschichteten thermoplastischen Polymers, angrenzende beschichtete Teilchen, die in der gesamten Folie voneinander getrennt sind, um die Folie mit einem Netz von miteinander verbundenen Mikroporen zu versehen, wobei die angrenzenden thermoplastischen Polymerteilchen über eine Vielzahl von Fasern miteinander verbunden sind, die aus dem thermoplastischen Polymer bestehen.

**11.** Laminierte Struktur, umfassend mikroporöses Folienmaterial (25) nach Anspruch 10 und mindestens ein weiteres Folienmaterial.

**12.** Mikroporöses Folienmaterial (25) nach Anspruch 10, ferner dadurch gekennzeichnet, daß das thermoplastische Polymer und die Verbindung ausgewählt werden aus der Gruppe, bestehend aus:
    (a) Polypropylen mit Mineralöl, Dioctylphthalat oder Lackbenzine
    (b) Polyethylen mit Mineralöl oder Lackbenzine;
    (c) Polypropylen/Polyethylen-Copolymer mit Mineralöl;
    (d) Polyethylenterephthalat mit Diethylphthalat;
    (e) Polycaprolactam mit Triethylenglycol;
    (f) Polyvinylidenfluorid mit Dibutylphthalat;
    (g) Polybutylenterephthalat mit Diethylphthalat und
    (h) Polyester-Copolymer mit Dioctylphthalat.

**13.** Mikroporöses Folienmaterial (25), hergestellt nach dem Verfahren nach Anspruch 5, dadurch gekennzeichnet, daß es kristallisierbares thermoplastisches Polymer aufweist, wobei die mikroporöse Folie eine Innenstruktur aufweist, die gekennzeichnet ist durch eine Vielzahl von beabstandeten, wahllos verteilten, nichtgleichförmig geformten, gleichachsigen, nichtporösen Teilchen des thermoplastischen Materials, angrenzende Teilchen, die in der gesamten Folie voneinander getrennt sind, um die Folie mit einem Netz von miteinander verbundenen Mikroporen zu versehen, die über eine Vielzahl von Fasern miteinander verbunden sind, die aus dem thermoplastischen Polymer bestehen.

**14.** Laminierte Struktur, ferner gekennzeichnet durch die Einbeziehung der mikroporösen Folie (25) nach Anspruch 13 und mindestens einem weiteren Folienmaterial.

**Revendications**

**1.** Procédé de fabrication d'une feuille microporeuse, qui comprend les étapes suivantes :

16

(a) le mélange de masse fondue pour former une solution d'un polymère thermoplastique cristallisable avec un composé avec lequel le polymère thermoplastique est miscible et dans lequel le polymère thermoplastique se dissolvera à la température de fusion du polymère thermoplastique susdit mais qui est non miscible en dessous de la température de fusion de ce polymère thermoplastique et à partir duquel ce polymère thermoplastique se séparera en phase lors du refroidissement à une température en dessous de la température de fusion dudit polymère thermoplastique;

(b) la formation d'une feuille (25) de la solution mélangée de masse fondue;

(c) le refroidissement de ladite feuille à une température à laquelle le composé susdit devient non miscible avec le polymère thermoplastique pour provoquer l'apparition d'une séparation de phase entre le composé et la polymère précités pour former ainsi une feuille comprenant un agrégat d'une première phase comprenant des particules de ce polymère thermoplastique dans une seconde phase comprenant ce composé avec des particules de polymère thermoplastique adjacentes distinctes mais comportant une pluralité de zones de continuité, caractérisé en ce que la feuille (25) précitée est alors étirée au-delà de la limite élastique dans au moins une direction pour séparer mutuellement les particules adjacentes de polymère thermoplastique de manière à former un réseau de micropores interconnectés entre celles-ci et à atténuer de façon permanente la matière polymérique thermoplastique dans les zones de continuité susdites pour former des fibrilles et en ce que la solution précitée comprend 30 à 80 parties en poids du polymère thermoplastique cristallisable susdit et, parallèlement, 70 à 20 parties en poids du composé susdit.

2. Procédé suivant la revendication 1, caractérisé en outre par le fait que l'orientation précitée est une orientation biaxiale.

3. Procédé suivant la revendication 1, caractérisé en outre par le fait que l'orientation précitée confère une augmentation de longueur de la feuille (25) d'environ 10 à environ 1000 % de la longueur initiale de ladite feuille.

4. Procédé suivant l'une quelconque des revendications précédentes, caractérisé en outre en ce qu'il comprend l'étape additionnelle de séparation du composé précité.

5. Procédé suivant l'une quelconque des revendications précédentes, caractérisé en outre en ce qu'il comprend l'étape additionnelle de stabilisation dimensionnelle de la feuille (25) précitée en chauffant la feuille orientée, pendant qu'elle est retenue, à une température de stabilisation à la chaleur.

6. Procédé suivant l'une quelconque des revendications 1, 3, 4 et 5, comprenant en outre l'étape additionnelle de stratification de la feuille microporeuse (25) sur une seconde feuille.

7. Procédé suivant l'une quelconque des revendications précédentes, caractérisé en outre en ce que le polymère thermoplastique et le composé précités sont choisis dans le groupe comprenant :
(a) du polypropylène avec de l'huile minérale, du dioctylphtalate ou des esprits minéraux;
(b) du polyéthylène avec de l'huile minérale ou des esprits minéraux;
(c) un copolymère de polypropylène-polyéthylène avec de l'huile minérale;
(d) du polyéthylène téréphtalate avec du diéthylphtalate;
(e) du polycaprolactame avec du triéthylène glycol;
(f) du fluorure de polyvinylidène avec du dibutyl phtalate;
(g) du polybutylène téréphtalate avec du diéthylphtalate; et
(h) un copolymère de polyester avec du dioctylphtalate.

8. Procédé suivant l'une ou l'autre des revendications 1 et 4, caractérisé en outre en ce qu'il comprend l'étape additionnelle d'imbiber la matière en feuille microporeuse d'une matière d'imbibition.

9. Procédé suivant l'une ou l'autre des revendications 1 et 4, caractérisé en outre en ce qu'il comprend l'étape additionnelle de revêtir la matière en feuille microporeuse résultante.

10. Matière en feuille microporeuse obtenable suivant le procédé de la revendication 1, ladite feuille microporeuse ayant une structure interne caractérisée par une multiplicité de particules non poreuses, équiaxes, de forme non uniforme, dispersées de façon désordonnée, espacées du polymère thermoplastique susdit enrobées du composé susdit, les particules enrobées adjacentes dans la totalité de ladite feuille étant mutuellement séparées pour que la feuille forme un réseau de micropores interconnectés et lesdites particules de polymère thermoplastique adjacentes étant reliées mutuellement par une pluralité de fibrilles constituées du polymère thermoplastique susdit.

11. Structure stratifiée comprenant une matière en feuille microporeuse (25) suivant la revendication 10 et au moins une autre matière en feuille.

12. Matière en feuille microporeuse (25) suivant la revendication 10, caractérisée en outre en ce que le polymère thermoplastique et le composé précités sont choisis dans le groupe comprenant :
   (a) du polypropylène avec de l'huile minérale, du dioctylphtalate ou des esprits minéraux;
   (b) du polyéthylène avec de l'huile minérale ou des esprits minéraux;
   (c) un copolymère de polypropylène-polyéthylène avec de l'huile minérale;
   (d) du polyéthylène téréphtalate avec du diéthylphtalate;
   (e) du polycaprolactame avec du triéthylène glycol;
   (f) du fluorure de polyvinylidène avec du dibutyl phtalate;
   (g) du polybutylène téréphtalate avec du diéthylphtalate; et
   (h) un copolymère de polyester avec du dioctylphtalate.

13. Matière en feuille microporeuse (25) faite suivant le procédé de la revendication 5, comprenant un polymère thermoplastique cristallisable, cette feuille microporeuse ayant une structure interne caractérisée par une multiplicité de particules non poreuses, équiaxes, de forme non uniforme, disposées de façon désordonnée, espacées de ce polymère thermoplastique, les particules adjacentes dans la totalité de la feuille étant séparées mutuellement pour que la feuille forme un réseau de micropores interconnectés et étant reliées mutuellement par une pluralité de fibrilles constituées du polymère thermoplastique susdit.

14. Structure stratifiée, caractérisée en outre en ce qu'elle comprend la feuille microporeuse (25) de la revendication 13 et au moins une autre matière en feuille.

Fig.1

FIG. 2

FIG. 3

FIG. 4

FIG. 5

FIG. 6